# EUROPÄISCHE PATENTSCHRIFT

(11) **EP 0 678 438 B1**
(45) Veröffentlichungstag und Bekanntmachung des Hinweises auf die Patenterteilung: **04.07.2001**
(21) Anmeldenummer: 95810248.5
(22) Anmeldetag: 12.04.1995
(51) Int. Cl.: B62B 5/04

(54) **Bremssystem für Fahrbehälter**
Brake system for roll-container
Frein pour conteneurs roulants

(30) Priorität: 21.04.1994 CH 122494
(43) Veröffentlichungstag der Anmeldung: 25.10.1995
(73) Patentinhaber: Bucher Management AG, 8117 Fällanden (CH)
(72) Erfinder: Bucher, Peter, CH-8330 Pfäffikon (CH)

(56) Entgegenhaltungen:
- EP-A- 0 072 491
- EP-A- 0 332 876
- EP-A- 0 447 863
- WO-A-90/12721
- DE-A- 3 042 599
- FR-A- 2 562 860

## Beschreibung

Die Erfindung bezieht sich auf ein Bremssystem für einen fahrbaren Behälter, insbesondere für einen Trolley. Zur Verteilung von Mahlzeiten, Getränken und andere Waren werden vor allem in Passagierflugzeugen, aber auch in Zügen, Bussen, auf Schiffen oder z.B. auch in Spitälern fahrbare Behälter, sogenannte Trolleys oder Carts, verwendet. Diese bleiben bei Nichtgebrauch in den Bordküchen verstaut und gesichert, damit sie bei heftigen Fahr- oder Flugbewegungen und auch bei einem Unfall nicht herumgeworfen werden. Für den Service werden die Trolleys vom Personal während des Fluges durch die engen Gänge bewegt, um den Inhalt an die Passagiere zu verteilen. Diese Trolleys erreichen ein hohes Gesamtgewicht von bis 90 kg, in Ausnahmefällen bis 120 kg. Die Abmessungen sind in der Regel vorgegeben, und es muss ein möglichst grosser Volumenanteil für den Inhalt genutzt werden bei möglichst kompakten Aussenabmessungen und bei einer relativ geringen Breite des fahrbaren Behälters von z.B. nur 30 cm, welches bedingt ist durch die schmalen Gänge, vor allem in Flugzeugen, aber auch in Zügen und Reisebussen. Dies führt u.a. gezwungenermassen zu kleinen Rädern und zu Bremssystemen, welche den Anforderungen bezüglich Wirksamkeit, Sicherheit, Benutzerfreundlichkeit, Unterhaltsaufwand und Herstellkosten nicht mehr zu genügen vermögen. Der Fahrbehälter muss trotz der eingeschränkten Platzverhältnisse für Räder und Bremsen unter unruhigen Fahrbedingungen oder z.B. im Steigflug sicher gebremst und abgestellt werden können. Auch andere Sicherungssysteme wie z.B. Verankern am Sitz haben sich aus Bedienungs- und aus Kostengründen nicht bewährt.

Die EP 332 876 offenbart ein Bremssystem mit einem Bremsmodul an jeder zu bremsenden Radeinheit. Hier sind Tretpedale als Winkelhebel ausgebildet, die direkt auf stabartige Träger von Bremsmodulen an den zwei benachbarten Rädern an einem Ende des Wagens einwirken.

Aus der EP 447 863 ist ein Bremssystem mit drei verschiedenen Arten von separierbaren Modulen bekannt geworden, mit einem Pedalmodul, einer Übertragungs- und Verbindungsvorrichtung und einem Bremsmodul an jeder der vier Radeinheiten. Hier wird von zwei Pedalen einer Pedaleinheit über zwei Lenker eine zentrale schwenkbare Schwingplatte in beiden Drehrichtungen betätigt, an deren vier Ecken je eine Schubstange zu einer Blockiereinrichtung an den vier Radeinheiten führt. Die Betätigung erfolgt über das Verschwenken der Schwinge, wobei hier eine asymmetrische, d.h. ungleiche Verschiebung der Schubstangen an den Blockiereinrichtungen entsteht, die wohl ein sicheres Blockieren der Räder im Stand mittels eines Verzahnungseingriffs erlaubt, womit aber keine dosierbare und gleichmässige Bremsung (auch in Fahrt) an jeder Radeinheit möglich ist. Diese Geometrie ist überdies nur für kurze, d.h. relativ breite Trolleys anwendbar. Sie ist jedoch nicht anwendbar für grosse, lange und relativ schmale Trolleys und für solche mit mehr als vier Rädern, z.B. mit sechs Rädern. Überdies bildet auch diese Konstruktion einen relativ aufwendigen und die ganze Bodenplatte des Trolleys überdeckenden Mechanismus.

Es ist daher Aufgabe der vorliegenden Erfindung, die Unzulänglichkeiten der bisherigen Bremsen zu überwinden und ein Bremssystem zu schaffen, das sowohl rationell herstellbar, einfach montierbar, unterhaltsfreundlich und robust ist, als auch gute und sichere Bremseigenschaften bei einfacher, leichter Bedienbarkeit ergibt und welches sich zudem auf alle Arten und Grössen von Trolleys anwenden lässt. Diese Aufgabe wird erfindungsgemäss gelöst durch ein Bremssystem gemäss Anspruch 1.

Durch die Ausgestaltung mit der Merkmalskombination von Anspruch 1, wird ein leicht bedienbares und universell einsetzbares. System geringer Bauhöhe mit sicheren Bremseigenschaften geschaffen, welches zudem als Baukastensystem auf ganze Baureihen von Trolleys unterschiedlicher Art, Grösse und Anzahl von Radeinheiten anwendbar ist.

Die abhängigen Patentansprüche betreffen besonders vorteilhafte Weiterbildungen der Erfindung mit weiter verbesserten Eigenschaften bezüglich rationeller Herstellung und Unterhalt, effizienter Handhabung und Sicherheit. Weitere Vorteile liegen darin, dass das System einen flachen Behälterboden ermöglicht, ohne die bisherigen vorstehenden und aufwendigen Bremsübertragungsmechanismen, sowie dass bei Verwendung geeigneter Rad- oder Rolleneinheiten das ganze Bremssystem inkl. Rädern waschmaschinenfest ausgeführt werden kann.

Im folgenden wird die Erfindung anhand von Beispielen und Figuren weiter erläutert. Dabei zeigt
- Fig. 1a, b: schematisch ein erfindungsgemässes Bremssystem mit Modulen,
- Fig. 2 a, b: Pedalmodule- und Brems-Radmodule in zwei Ansichten,
- Fig. 3: ein System mit Bremslösevorrichtung am Handgriff des fahrbaren Behälters,
- Fig. 4: ein Pedalmodul mit zwei Pedalen,
- Fig. 5: eine Bremslösevorrichtung,
- Fig. 6: ein Bremsmodul mit Schwenkhebel und Kulissenscheibe,
- Fig. 7a, b: eine Kulissenscheibe mit Schwenkhebel,
- Fig. 8a, b: eine Hubvorrichtung mit einem Hubteil,
- Fig. 9: ein weiteres Beispiel eines Bremsmoduls,
- Fig. 10: eine Rampe mit variabler Steigung,
- Fig. 11a, b: ein Bremsmodul mit direkter Betätigung durch eine Rampe auf der Schiebestange,
- Fig. 12: ein Bremsmodul mit Hebelübertragungselement.

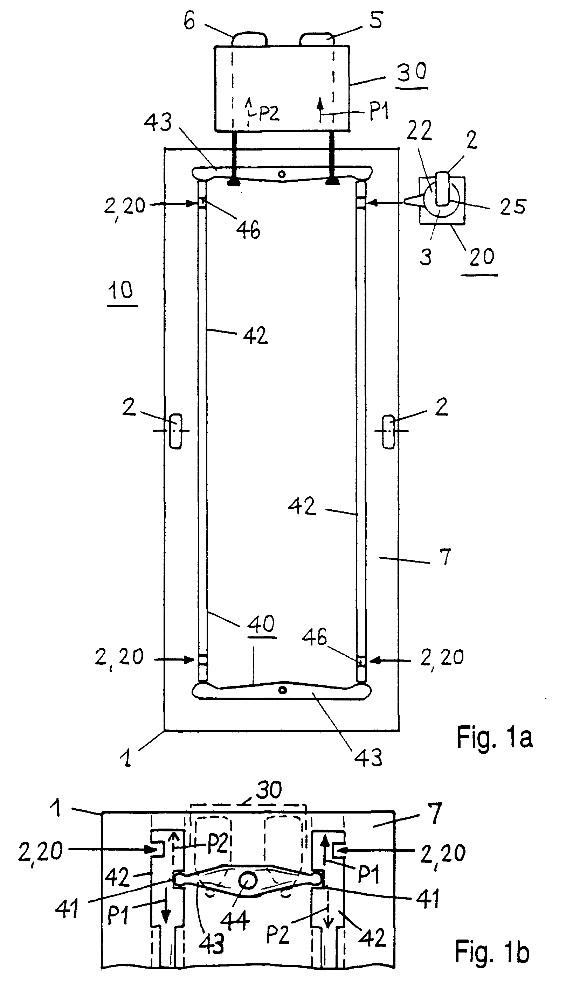

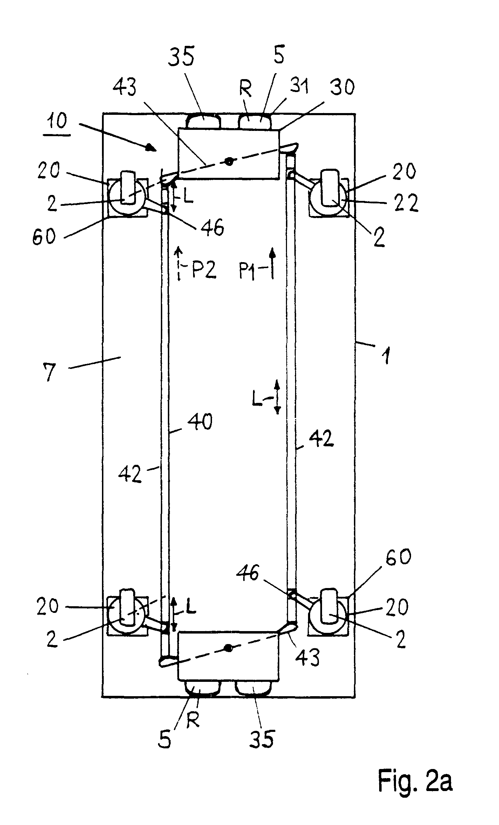

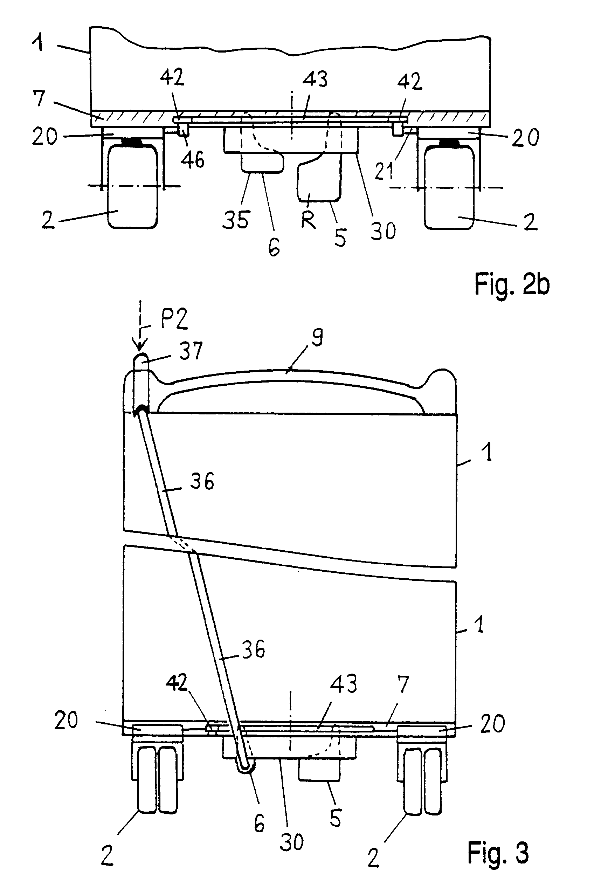

Figur 1a zeigt, von unten auf einen fahrbaren Behälter oder Trolley 1 bzw. auf dessen Bodenplatte 7 gesehen, ein erfindungsgemässes Bremssystem 10 mit einem Pedalmodul 30, einem Verbindungs- und Übertragungsmodul 40 sowie mit Bremsmodulen 20. Das Pedalmodul 30 weist eine Bremsbetätigungsvorrichtung 5 und eine Bremslösevorrichtung 6, z.B. in Form von Pedalen auf. An jeder zu bremsenden Radeinheit 2 ist je ein Bremsmodul 20 mit einer Radbremse 25 angebracht. An nicht zu bremsenden Radeinheiten wird kein Bremsmodul eingesetzt. Die Rad- oder Rolleneinheiten 2 können dabei ein einfaches Rad, wie in Figuren 1 und 2, oder ein Doppelrad, wie in Figuren 3, 6 und 11, aufweisen. Entsprechend wirkt dabei ein Bremsklotz auf ein oder auf beide Räder bzw. Rollen 2. In Figur la sind sechs Räder oder Radeinheiten dargestellt, von denen nur die äusseren vier Räder schwenkbar und bremsbar, d.h. mit je einem Bremsmodul 20 ausgeführt sind, während die beiden inneren Räder fixiert und nicht gebremst sind. Durch die erfindungsgemässe Modulbauweise können beliebige Varianten auf einfache und rationelle Weise gebaut werden, z.B. auch kleine vierrädrige Trolleys mit vier oder auch nur mit zwei gebremsten Rädern.

Dazu illustriert Figur 1b ein Beispiel mit nur einem Kipphebel 43 und einem Pedalmodul 30. Im Hinbliche auf diese mitbeansprucht Ausgestaltung ergibt sich, daß das Anspruchs merkmal "zwischen den Modulen wer durch Druckträfte übertragen" nicht bedeutet, daß die "Schiebestange" ein reiner Druckstäb ist, der keine Zugkräfte übertragen kann.

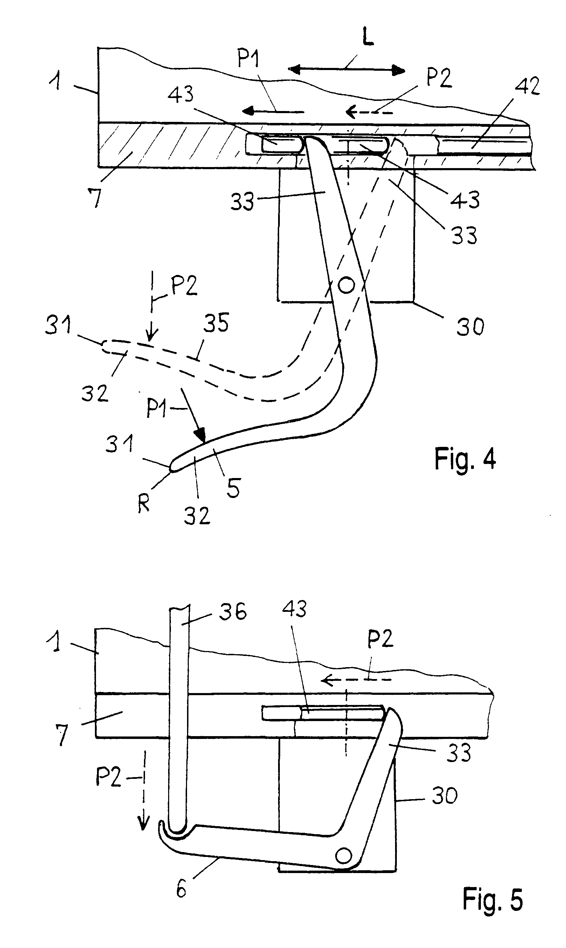

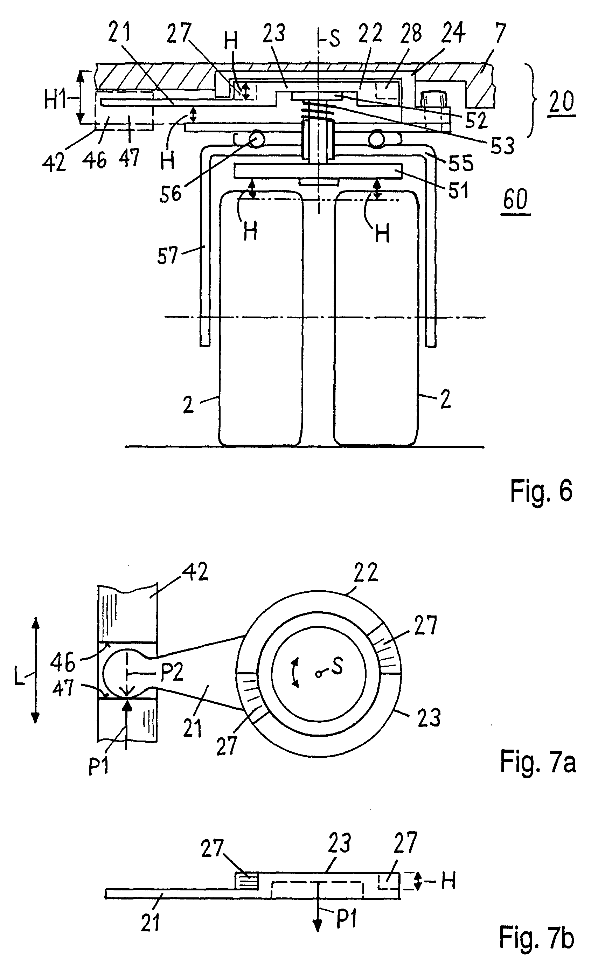

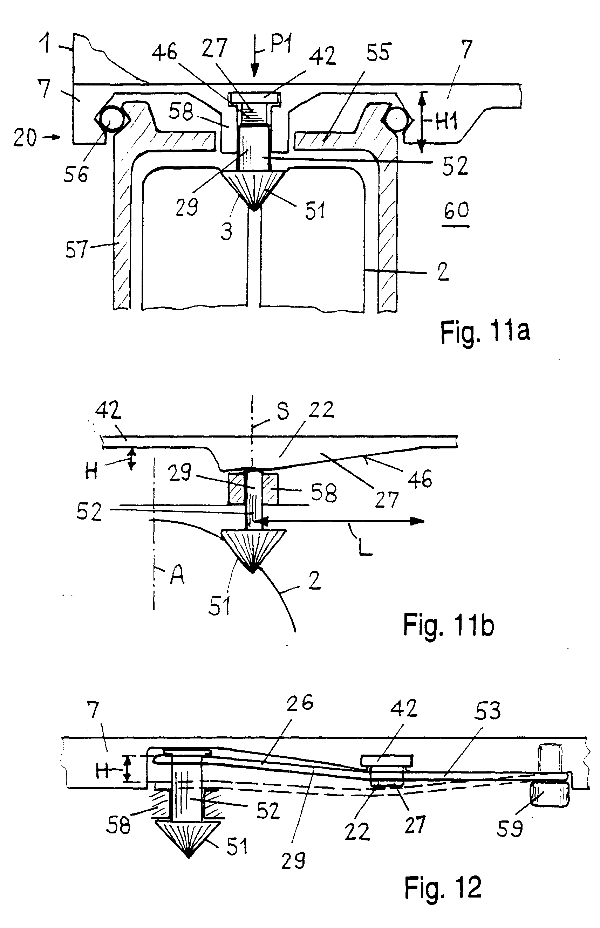

Im Beispiel von Figur 2a, b weist der fahrbare Behälter 1 vier drehbare und bremsbare Räder 2 mit Bremsmodulen 20 und je einem Pedalmodul 30 mit Pedalen 31 an beiden Längsseiten des Trolleys 1 auf. Eine Radeinheit 2 und ein Bremsmodul 20 können dabei eine Rad-Bremseinheit 60 bilden (siehe Fig. 6, 11a). Ein Bremspedal wirkt über einen Kipphebel 43 auf Schiebestangen 42, wobei zwei Kipphebel 43 und zwei Schiebestangen 42 ein nur durch Druckkräfte P1 und P2 betätigtes Kräfteparallelogramm bilden. Da hier keine Zugkräfte zu übertragen sind, können diese Bauelemente auf einfachste Art ausgeführt und ohne aufwendige Verbindungen wie Schrauben oder Nieten etc. zusammenmontiert werden. Alle Bremskräfte sind hier mit Pfeilen P1 und alle Bremslösekräfte bzw. Bremsrückstellkräfte mit Pfeilen P2 bezeichnet. An den Schiebestangen 42 sind Wirkflächen 46, z.B. als Stossflächen 47 (Fig. 6 bis 8) oder als Rampen 27 (Fig. 11, 12) angebracht. Diese Wirkflächen wiederum üben Druckkräfte P1 aus auf Übertragungselemente (Schwenkhebel 21, Fig. 6) und Hubvorrichtungen 22 der Bremsmodule 20, mittels welchen letztlich ein Bremsklotz an die Räder 2 angepresst und die Bremse auch fixiert wird. Das Pedalmodul 30 weist hier, wie in Fig. 4 weiter erklärt wird, ein Bremspedal 5 und ein Bremslösepedal 35 auf.
Das Beispiel von Fig. 1b weist einen auf einen Drehzahpfen 44 aufgelegten Kipphebel 43, dessen beide Enden in Ausnehmungen 41 der Schiebestangen eingelegt sind. Damit können hier beide Schiebestangen 42 durch nur einen einzigen Kipphebel 43 in beide Richtungen P1 (bremsen) und P2 (Bremse lösen) mittels Stosskräften bewegt werden. Es können damit also auch vier Bremsmodule an vier Rädern über beide Schiebestangen mit nur einem Kipphebel 43 und einem Pedalmodul 30 betätigt werden.

Aus der Frontansicht von Fig. 2b wird auch die äusserst platzsparende Bauweise des Systems ersichtlich, indem hier die Schiebestangen 42 und die Kipphebel 43 vollständig in den Behälterboden 7 integriert sind. Zwischen den Rädern 2 ist der Behälterboden 7 somit vollständig flach. Es kann also beim Überfahren von Schwellen und Hindernissen nichts einhaken oder hängenbleiben und beschädigt werden. Auch die Bremsmodule sind mindestens teilweise in den Behälterboden 7 versenkt und weisen damit eine minimale Bauhöhe H1 (siehe Fig. 6, 9, 11) auf.

Figur 3 zeigt als Bremslösevorrichtung 6 statt eines Pedals eine am Trolley 1 in dessen Handgriff 9 nach oben hinaufgeführte Schubstange 36 mit einem Druckknopf 37 im Handgriff. Wie in Figur 5 illustriert, überträgt die Schubstange 36 die Bremslösekraft P2 über den Hebel 6 auf den Kipphebel 43, in analoger Weise zum Pedal 35 von Figur 4. Diese Ausführungsvariante ermöglicht eine besonders einfache Handhabung des Trolleys 1.

In Figur 4 ist ein Pedalmodul 30 dargestellt mit zwei Pedalen, einem Brempedal 5 und einem Bremslösepedal 35. Niederdrücken (P1) des Fussteils 32 bewirkt durch den Schiebeteil 33 eine Verschiebung des Kipphebels 43 in Bremsrichtung P1, während analog dazu durch Drücken (P2) des Lösepedals 35 der Kipphebel auf der anderen Seite in Löserichtung P2 bewegt wird. Das Bremspedal 5 kann z.B. rot (R) gefärbt sein, so dass der niedergedrückte Zustand (P1), wenn die Bremse fixiert ist, von oben gut sichtbar ist. Das Bremslösepedal 35 kann nach Betätigung mit einer Feder wieder gehoben werden, so dass im gebremsten Zustand das fixierte, herabhängende, rote Bremspedal 5 (R) sichtbar ist, während im ungebremsten Zustand jedoch kein Pedal sichtbar wird. In einer weiteren möglichen Variante können die Funktionen der beiden Pedale 5 und 35 z.B. auch in einem Doppelpedal zusammengefasst sein. Durch Niederdrücken wird dabei die Bremse angezogen und durch Anheben des Doppelpedals wieder gelöst, z.B. mittels einer Gabel am Schiebeteil 33, welche den Kipphebel 43 entsprechend in beide Richtungen P1 und P2 betätigt.

Figur 6 zeigt ein Beispiel eines Bremsmoduls 20 mit einer Radeinheit 2, welches als Hubvorrichtung 22 eine Kulissenscheibe 23 enthält. Diese Kulissenscheibe weist nach Figuren 7a, 7b einen Schwenkhebel 21 und mindestens zwei äquidistante Rampen 27 auf. An den Schiebestangen 42 sind als Wirkflächen 46 vertikale Stossflächen 47 angebracht. Diese Stossflächen können z.B. in die Schiebestangen eingefräst oder auch aufgesetzt sein. Der Schwenkhebel 21 ist zwischen diese Stossflächen 47 eingelegt, so dass lineare Bewegungen L der Schiebestangen auf den Schwenkhebel 21 und die Kulissenscheibe 23 übertragen werden. Ein festes Gegenstück dazu bildet das Modulgehäuse 24 in Fig. 6 mit Nocken 28, auf welchen die Rampen 27 ablaufen. Durch Drehen der Kulissenscheibe 23 wird diese um einen Hub H gehoben und damit ein Stempel 52 mit einer Bremsplatte oder einem Bremsklotz 51 vertikal bewegt. Die Radeinheit 2 mit Halterung 57, Drehteller 55 und Lager 56 ist um 360° frei drehbar (Schwenkrollen). Der Stempel 52 ist dazu in der Radschwenkachse S angeordnet und der Bremsklotz 51 ist rotationssymmetrisch geformt. Beim Lösen der Bremse (P2) wird die Bremsplatte 51 durch eine Rückstellfeder 53 vom Rad abgehoben. Die Kulissenscheibe bewirkt eine Übersetzung der Schiebelänge L der Stange 42 von z.B. 25 - 40 mm in einen Hub H von z.B. 3 - 5 mm. Über die Pedale 5 und 35 und den Kipphebel 43 wird diese Schiebelänge L in einen Pedalhub von z.B. 30 - 50 mm umgesetzt.

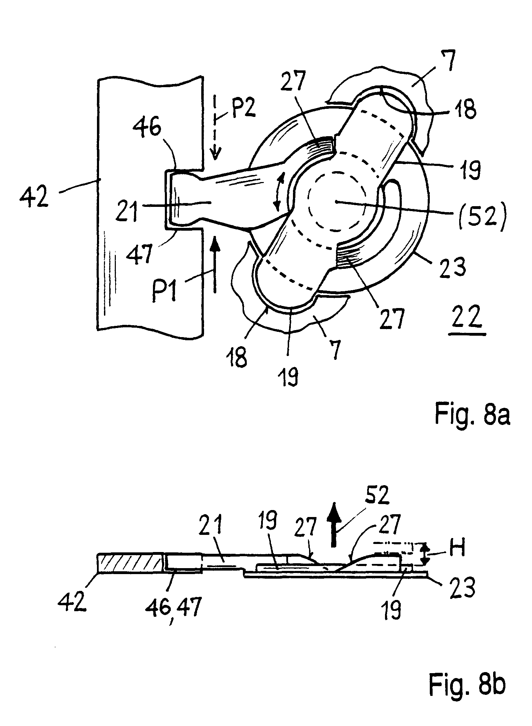

Die Figuren 8a, b zeigen ein weiteres Beispiel mit besonders flachen Schiebestangen 43, wie sie auch in Fig. 1b eingesetzt sind. Die Betätigung der Schwenkhebel 21 erfolgt hier durch Ausnehmungen in den Schiebestangen, welche ebenfalls Wirkflächen 46 in Form von Stossflächen 47 bilden. Im Unterschied z.B. von Fig. 6, ist hier als Gegenstück 28 zu den Rampen 27 der Kulissenscheibe 23 jedoch ein nicht drehbares Hubteil 19 in Ausnehmungen 18 des Behälterbodens 7 eingelegt. Bei Betätigung der Bremsen in Richtung P1 wird das Hubteil 19 durch die Rampen 27 angehoben, wodurch das Hubteil einen auf ihm liegenden Bremsstempel 52 bewegt.

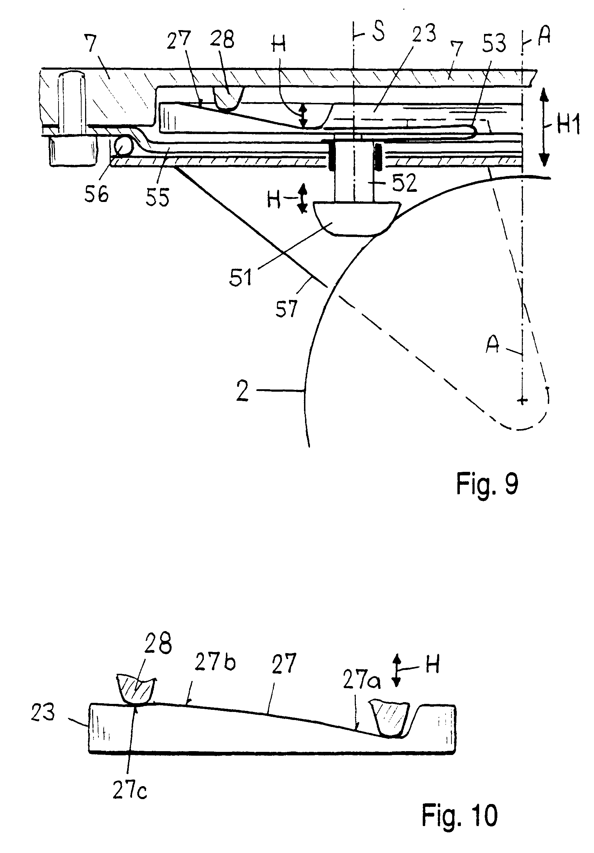

Figur 9 zeigt ein weiteres Beispiel eines Bremsmoduls mit Kulissenscheibe 23 als Hubvorrichtung 22. Aus dieser Seitenansicht des Rades 2 ist die erreichbare minimale Bauhöhe H1 gut erkennbar. Durch die Versetzung der Radschwenkachse S mit Bremsstempel 52 gegenüber der Radhochachse A wird für den Bremsklotz neben dem Rad Platz geschaffen, so dass die effektiv notwendige zusätzliche Bauhöhe für das Bremsmodul (inkl. Bremsklotz) sehr klein ausfällt. Das Bremsmodul ist zudem noch in den Behälterboden 7 versenkt, wobei hier auch noch das Gehäuse mit Nocken 28 als Gegenstück zur Rampe 27 der Kulissenscheibe 23 in den Behälterboden 7 integriert ist. Eine flache Rückstellfeder 53 findet im Inneren der Kulissenscheibe 23 Platz. Die letztlich notwendige zusätzliche Bauhöhe H1 für das Bremsmodul zwischen Behälterboden 7 und Rad 2 kann damit auf ein absolutes Minimum von z.B. nur noch wenigen Millimetern reduziert werden.

In Figur 10 ist ein Beispiel einer Rampe 27 an einer Kulissenscheibe 23 dargestellt, welche anfangs mit einer steileren Steigung 27a und am Ende (bei angezogener Bremse) mit einer flacheren Steigung 27b ausgebildet ist. Am Ende der Rampe ist eine schwache Vertiefung 27c vorgesehen, in welcher der Nocken 28 als Gegenstück bei angezogener Bremse einrastet. Damit wird die Rad-Bremse fixiert. In analoger Weise sind auch die Rampen 27 an den Schiebestangen 42 und die auf- und abbewegten Gegenstücke 29 in den Beispielen von Fig. 11 und 12 aufeinander abgestimmt.

Das Beispiel von Fig. 11a, b zeigt eine weitere, besonders einfache, leichte und platzsparende Variante eines Radbremsmoduls 60. Das Schwenklager 56 ist hier ebenfalls in den Boden 7 integriert. Die Radhalterung 57 bildet auch den Drehteller 55 des Lagers. An den Schiebestangen 42 sind Rampen 27 angebracht, welche direkt auf den Bremsbolzen 52 als Übertragungselement 29 einwirken (P1). Die Schiebelänge L der Schiebestangen wird so direkt in den Hub H an der Bremse 51, 52 umgesetzt. Der Bremsbolzen 52 ist mit einer flachen, zylindrischen Rundung der Rampe 27 angepasst und durch die Führung 58 parallel geführt, so dass er sich nicht verdreht. Den schwenkbaren Rädern 2 entspricht dabei der rotationssymmetrische, kegelförmige Bremsklotz 51.

Das erfindungsgemässe Bremssystem wird vorzugsweise aus Leichtbaumaterialien hergestellt wie aus Kunststoffen und Leichtmetallen. Z.B. mit einer Bodenplatte aus Aluminium, in welcher die Vertiefungen und Nuten für Bremsmodule und Schiebestangen einfach herstellbar sind.

Die Räder 2 mit Halterungen 57 und Drehteller 55 bestehen z.B. vorzugsweise aus Polyurethan, und für die Kugeln des Lagers 56 eignet sich z.B. der Kunststoff Polyoxymethylen POM. Die Rampen 27 an Schiebestangen 42 und Kulissenscheiben 23 bestehen vorzugsweise aus geeigneten Kunststoffen mit niedrigen Reibungskoeffizienten. Alle Reibpaarungen bestehen mindestens zum einen Teil aus Kunststoffen, so dass keine Schmiermittel (wie für Metallkugellager) erforderlich sind. Das ganze Bremssystem inklusive Rad-Bremseinheiten 60 mit Bremsmodulen und Rädern kann damit nicht nur besonders leicht, sondern auch noch waschmaschinenfest ausgeführt werden. All dies ergibt letztlich besonders einfach aufgebaute, rationell herstellbare und sichere Bremssysteme mit optimalen Service- und Bedienungseigenschaften.

Figur 12 zeigt eine Abwandlung des Beispiels von Fig. 11. Die Rampen 27 der Schiebestangen wirken wiederum direkt auf ein Übertragungselement 29 in Form eines einarmigen Hebels. Dieser ist an einem Ende mittels einer Schraube 59 am Boden 7 fixiert. Das andere Hebelende ist mit dem Bremsstempel 52 verbunden. Dies ergibt eine Hebelübersetzung von z.B 1: 2, d.h. 2 mm Hub an der Rampe 27 würden dann 4 mm Hub H an der Bremse entsprechen. Der Hebelteil 26 kann dabei als Anpress- und Ausgleichsfeder, und der Hebelteil 53 als Bremsrückstellfeder ausgebildet sein. Dies wird durch entsprechende Dimensionierung, z.B. als Blattfeder, und die Art der Einspannung 59 realisiert.

## Patentansprüche

1. Bremssystem für einen fahrbaren Behälter, insbesondere für einen Trolley (1), mit mindestens vier Radeinheiten (2), mit einer Bremsbetätigungsvorrichtung und einer Bremslösevorrichtung sowie mit einer Verbindungs- und Übertragungsvorrichtung und mit drei verschiedenen Arten von separierbaren Modulen: mit mindestens einem Pedalmodul (30), einem Verbindungs- und Übertragungsmodul (40) und mindestens zwei Bremsmodulen (20) an mindestens zwei zu bremsenden Radeinheiten mit je einem Bremsmodul (20) an jeder Radeinheit, wobei
- das Pedalmodul ein Betätigungspedal (5) und eine Bremslösevorrichtung (6) aufweist,
- das Verbindungs- und Übertragungsmodul (40) mindestens eine in Querrichtung angeordneten an einem Drehzapfen gelagerten Kipphebel (43), welcher vom Betätigungspedal (5) und von der Bremslösevorrichtung (6, 35) direkt betätigbar ist,
- und mindestens eine durch den Kipphebel in einer Längsführung bewegbare Schiebestange (42) aufweist und mit welcher mindestens einen Schiebestange mindestens zwei Bremsmodule (20) betätigbar sind,
- wobei auf das Betätigungspedal und die Bremslösevorrichtung ausgeübte Bremskräfte (P1) und Bremslösekräfte (P2) nur durch Druckkräfte vom Betätigungspedal (5) und der Bremslösevorrichtung (6, 35) auf den Kipphebel (43) und vom Kipphebel auf die Schiebestange (42) übertragen werden und
- wobei die Bremsmodule (20) je eine durch die Schiebestange (42) nur durch Druckkräfte direkt betätigbare Hubvorrichtung (22) aufweisen,
- welche eine Längsbewegung (L) der Schiebestange in eine Hubbewegung (H) eines Bremsklotzes (51) der Radbremse (25) transformiert.

2. Bremssystem nach Anspruch 1, dadurch gekennzeichnet, dass vier Radeinheiten mit je einem Bremsmodul (20) vorgesehen sind.

3. Bremssystem nach Anspruch 1, dadurch gekennzeichnet, dass sechs Radeinheiten vorgesehen sind, wovon die äusseren vier Radeinheiten je ein Bremsmodul (20) aufweisen.

4. Bremssystem nach Anspruch 1, dadurch gekennzeichnet, dass die Bremslösevorrichtung (6) am Trolley nach oben geführt und von Hand betätigbar ist.

5. Bremssystem nach Anspruch 4, dadurch gekennzeichnet, dass die Bremslösevorrichtung (6) eine Drucktaste (37) oder einen Hebel aufweist.

6. Bremssystem nach Anspruch 4, dadurch gekennzeichnet, dass die Bremslösevorrichtung (6) in einen Haltegriff (9) des Trolleys integriert ist.

7. Bremssystem nach Anspruch 1, dadurch gekennzeichnet, dass an den beiden Schmalseiten des Trolleys je ein Pedalmodul (30) vorgesehen ist.

8. Bremssystem nach Anspruch 1, dadurch gekennzeichnet, dass die Bremsmodule (20) einen Schwenkhebel (21) aufweisen, welcher auf eine Schiebestange (42) des Verbindungsmoduls (40) wirkt.

9. Bremssystem nach Anspruch 8, dadurch gekennzeichnet, dass der Schwenkhebel (21) auf Stossflächen (47) an der Schiebestange (42) einwirkt.

10. Bremssystem nach Anspruch 1, dadurch gekennzeichnet, dass das Pedalmodul (30) mindestens ein gebogenes, drehbar gelagertes Pedal (31) mit einem Fussteil (32) und einem Schiebeteil (33) aufweist, wobei der Schiebeteil auf einen Kipphebel (43) des Verbindungsmoduls wirkt.

11. Bremssystem nach Anspruch 10, dadurch gekennzeichnet, dass zwei derartige Pedale (31), eines als Bremspedal (5) und das andere als Bremslösepedal (35), vorgesehen sind.

12. Bremssystem nach Anspruch 10, dadurch gekennzeichnet, dass das Verbindungsmodul (40) Schiebestangen (42) aufweist, welche in den Behälterboden (7) eingelassen sind.

13. Bremssystem nach Anspruch 1, dadurch gekennzeichnet, dass das Verbindungsmodul (40) zwei endseitige Kipphebel (43) und zwei flache Schiebestangen (42) aufweist, welche ein nur durch Druckkräfte betätigtes Parallelogramm bilden.

14. Bremssystem nach Anspruch 1, dadurch gekennzeichnet, dass alle Verbindungen zwischen den Modulen (20, 30, 40) zur Übertragung der Pedalbewegungen auf die Bremsen (25) an den Radeinheiten nur durch Druckkräfte (P1, P2) betätigt werden.

15. Bremssystem nach Anspruch 1, dadurch gekennzeichnet, dass alle Verbindungen in den Modulen (20, 30, 40) zur Übertragung der Pedalbewegungen auf die Bremsen nur durch Druckkräfte (P1, P2) betätigt werden.

16. Bremssystem nach Anspruch 1, dadurch gekennzeichnet, dass die Rückstellung des Bremspedals (5) beim Lösen der Bremse durch eine Federkraft der Bremsmodule (20) erfolgt.

17. Bremssystem nach Anspruch 1, gekennzeichnet durch einen Kipphebel (43), dessen beide Enden je in eine Ausnehmung (42) von zwei flachen Schiebestangen (42) eingreift.

18. Bremssystem nach Anspruch 1, dadurch gekennzeichnet, dass die Bremsmodule (20) eine mittels Wirkflächen (46) an Schiebestangen (42) betätigbare Hubvorrichtung (22) mit einer Rampe (27) und einem Gegenstück (24, 29) aufweisen zur Erzeugung einer Hubbewegung, welche die Radbremse (25) betätigt.

19. Bremssystem nach Anspruch 18, dadurch gekennzeichnet, dass die Hubvorrichtung eine Rampe (27) als Wirkfläche an der Schiebestange (42) und ein auf die Bremse wirkendes Übertragungselement (29) als Gegenstück aufweist, welches auf der Rampe ablaufend, senkrecht zur Schiebestange bewegbar ist.

20. Bremssystem nach Anspruch 19, gekennzeichnet durch einen einarmigen Hebel als Übertragungselement (29), welcher am einen Ende am Behälterboden (7) fixiert ist, am anderen Ende auf einen Bremsstempel (52) wirkt und dazwischen als Gegenstück auf der Rampe (27) aufliegt.

21. Bremssystem nach Anspruch 18, dadurch gekennzeichnet, dass ein Federelement (26) zwischen die Hubvorrichtung (22) und die Radbremse (25) geschaltet ist.

22. Bremssystem nach Anspruch 18, dadurch gekennzeichnet, dass die Hubvorrichtung (22) eine schwenkbare Kulissenscheibe (23) mit einem Schwenkhebel (21) und ein festes zugeordnetes Gegenstück (24) als Gehäuse aufweist.

23. Bremssystem nach Anspruch 22, dadurch gekennzeichnet, dass die Kulissenscheibe (23) mindestens zwei äquidistante Rampen (27) und den Rampen zugeordnete gerundete Nocken oder Stifte (28) des festen Gegenstücks (24) aufweist.

24. Bremssystem nach Anspruch 18, dadurch gekennzeichnet, dass die Hubvorrichtung (22) eine schwenkbare Kulissenscheibe (23) und ein drehfestes Hubteil 19 als Gegenstück aufweist.

25. Bremssystem nach Anspruch 18, dadurch gekennzeichnet, dass die Steigung der Rampe (27) anfangs grösser ist als am Ende der Rampe.

26. Bremssystem nach Anspruch 18, dadurch gekennzeichnet, dass mindestens eines der beiden Teile, Rampe (27) und Gegenstück (24, 29), aus Kunststoff besteht.

27. Bremssystem nach Anspruch 18, dadurch gekennzeichnet, dass mindestens eines der beiden Teile, Rampe (27) und Gegenstück (24, 29) gespritzt, gegossen oder geschmiedet ist.

28. Bremssystem nach Anspruch 18, dadurch gekennzeichnet, dass die Hubvorrichtung (22) über einen federbelasteten Stempel einen Bremsklotz (51) an die Radeinheit anpresst.

29. Bremssystem nach Anspruch 18, dadurch gekennzeichnet, dass das Bremsmodul mindestens teilweise in den Behälterboden (7) versenkt ist und dass das Bremsmodul mit der Radeinheit zusammen eine Baueinheit bildet.

30. Trolley mit einem Bremssystem gemäss einem der vorangehenden Ansprüche.

## Claims

1. Brake system for a roll-container, particularly for a trolley (1), with at least four wheel units (2) with a brake operating mechanism and a brake release mechanism as well as with a connecting and transmission mechanism and with three different, separate modules: with at least one pedal module (30), one connecting and transmission module (40) and at least two brake modules (20) on at least two wheel units to be braked with one brake module (20) on each wheel unit, wherein
- the pedal module has an operating pedal (5) and a brake release mechanism (6),
- the connecting and transmission module (40) has at least one rocker arm (43), arranged in transversal direction and mounted on a pivot, which is directly operable by the operating pedal (5) and the brake release mechanism (6, 35)
- and has at least one sliding rod (42) which is movable in a longitudinal guide
and where at least two brake modules (20) are operable by said at least one sliding rod,
- wherein braking forces (P1) and brake releasing forces (P2) which are applied to the operating pedal and the brake release mechanism are transferred from the operating pedal (5) and the brake release mechanism (6, 35) to the rocker arm (43) and from the rocker arm to the sliding rod (42) by compressive forces only and
- wherein the brake modules (20) each have one lifting device (22), which is directly operated by the sliding rod (42) and by compressive forces only
- and which are transforming a longitudinal movement (L) of the sliding rod into a lifting movement (H) of a brake block (51) of the wheel brake (25).

2. Brake system according to claim 1, characterized in that there are four wheel units each with one brake module (20).

3. Brake system according to claim 1, characterized in that there are six wheel units, whereof the four outer wheel units have a brake module (20).

4. Brake system according to claim 1, characterized in that the brake release mechanism (6) on the trolley is guided upwards and is manually operable.

5. Brake system according to claim 4, characterized in that the brake release mechanism (6) has a pushbutton (37) or a lever.

6. Brake system according to claim 4, characterized in that the brake release mechanism (6) is integrated into a handle (9) of the trolley.

7. Brake system according to claim 1, characterized in that there is a pedal module (30) on each of the two narrow sides of the trolley.

8. Brake system according to claim 1, characterized in that the brake modules (20) have a rocking lever (21) acting on a sliding rod (42) of the connecting module (40).

9. Brake system according to claim 8, characterized in that the rocking lever (21) acts on abutting surfaces (47) on the sliding rod (42).

10. Brake system according to claim 1, characterized in that the pedal module (30) has at least one bent, rotatably mounted pedal (31) with a foot part (32) and a sliding part (33), the sliding part acting on a rocker arm (43) of the connecting module.

11. Brake system according to claim 10, characterized in that there are two such pedals (31), one as a brake pedal (5) and the other as a brake release pedal (35).

12. Brake system according to claim 10, characterized in that the connecting module (40) has sliding rods (42), which are embedded in the container bottom (7).

13. Brake system according to claim 1, characterized in that the connecting module (40) has two terminal rocker arms (43) and two flat sliding rods (42), which form a parallelogram operated solely by compressive forces.

14. Brake system according to claim 1, characterized in that all the connections between the modules (20, 30, 40) for the transmission of pedal movements to the brakes (25) on the wheel units are operated solely by compressive forces (P1, P2).

15. Brake system according to claim 1, characterized in that all the connections in the modules (20, 30, 40) for the transmission of the pedal movements to the brakes are operated solely by compressive forces (P1, P2).

16. Brake system according to claim 1, characterized in that the restoring of the brake pedal (5) on releasing the brake takes place by a spring force of the brake modules (20).

17. Brake system according to claim 1, characterized by a rocker arm (43), whose two ends each engage in one recess (41) of two flat sliding rods (42).

18. Brake system according to claim 1, characterized in that the brake modules (20) have a lifting device (22), with ramp (27) and counterpart (24, 29), operable by means of working surfaces (46) on sliding rods (42) for producing a lifting movement, which operates the wheel brake (25).

19. Brake system according to claim 18, characterized in that the lifting device has a ramp (27) on the sliding rod (42) and a transmission element (29) acting on the brake as a counterpart, which runs on the ramp and is movable perpendicularly to the sliding rod.

20. Brake system according to claim 19, characterized by a one arm lever as the transmission element (29), which at one end is fixed to the container bottom (7) and at the other end acts on a brake plunger (52) and between the same rests as a counterpart on the ramp (27).

21. Brake system according to claim 18, characterized in that a spring element (26) is located between the lifting device (22) and the wheel brake (25).

22. Brake system according to claim 18, characterized in that the lifting device (22) has a swivellable link (23) with a rocking lever (21) and a fixed associated counterpart (24) as a casing.

23. Brake system according to claim 22, characterized in that the link disk (23) has at least two equidistant ramps (27) and rounded cams or pins (28) of the fixed counterpart (24) associated with the ramps.

24. Brake system according to claim 18, characterized in that the lifting device (22) has a swivellable link disk (23) and a non-rotary lifting part (19) as a counterpart.

25. Brake system according to claim 18, characterized in that the gradient of the ramp (27) is greater at the start than at the end of the ramp.

26. Brake system according to claim 18, characterized in that at least one of the two parts, ramp (27) and counterpart (24, 29) is made from plastic.

27. Brake system according to claim 18, characterized in that at least one of the two parts, ramp (27) and counterpart (24, 29) is injection moulded, cast or forged.

28. Brake system according to claim 18, characterized in that the lifting device (22) presses onto the wheel unit by means of a spring-loaded plunger a brake block (51).

29. Brake system according to claim 18, characterized in that the brake module is at least partly countersunk into the container bottom (7) and that the brake module with the wheel unit together forms a standard component.

30. Trolley with a brake system according to one of the preceding claims.

## Revendications

1. Système de freinage destiné à un conteneur mobile, en particulier un trolley (1), comprenant au moins quatre unités de roues (2), un dispositif de commande des freins et un dispositif de desserrage des freins, ainsi qu'un dispositif de liaison et de transmission et trois types différents de modules séparables : comprenant au moins un module à pédales (30), un module de liaison et transmission (40) et au moins deux modules de freinage (20) montés sur au moins deux unités de roues réduisant la vitesse, avec un module de freinage (20) sur chaque unité de roues, moyennant quoi :
- le module à pédales présente une pédale de commande (5) et un dispositif de desserrage des freins (6),
- le module de liaison et de transmission (40) présente au moins un levier à bascule (43) logé dans le sens transversal contre un axe de rotation, lequel peut être manoeuvré directement par la pédale de commande (5) et par le dispositif de desserrage des freins (6, 35),
- et présente au moins une barre mobile (42) qui peut être déplacée dans le sens longitudinal par le levier à bascule et laquelle au moins une barre mobile permet d'actionner au moins deux modules de freinage (20),
- des forces de freinage (P1) et des forces de desserrage des freins (P2), exercées sur la pédale de commande et le dispositif de desserrage des freins, étant transmises uniquement par des forces de pression exercées par la pédale de commande (5) et le dispositif de desserrage des freins (6, 35) sur le levier à bascule (43) et par le levier à bascule sur la barre mobile (42), et
- les modules de freinage (20) comportant chacun un dispositif de levage (22) pouvant être actionné directement par la barre mobile (42) uniquement par des forces de pression,
- lequel dispositif de levage transforme un mouvement longitudinal (L) de la barre mobile en un mouvement de levage (H) d'un sabot de frein (51) du frein (25) monté sur les roues.

2. Système de freinage selon la revendication 1, caractérisé en ce qu'il est prévu quatre unités de roues comportant chacune un module de freinage (20).

3. Système de freinage selon la revendication 1, caractérisé en ce qu'il est prévu six unités de roues, parmi lesquelles les quatre unités de roues extérieures présentent chacune un module de freinage (20).

4. Système de freinage selon la revendication 1, caractérisé en ce que le dispositif de desserrage des freins (6) est guidé vers le haut sur le trolley et peut être actionné manuellement.

5. Système de freinage selon la revendication 4, caractérisé en ce que le dispositif de desserrage des freins (6) est muni d'une touche de pression (37) ou d'un levier.

6. Système de freinage selon la revendication 4, caractérisé en ce que le dispositif de desserrage des freins (6) est intégré dans une poignée de maintien (9) du trolley.

7. Système de freinage selon la revendication 1, caractérisé en ce qu'il est prévu un module à pédales (30) sur chacun des deux petits côtés du trolley.

8. Système de freinage selon la revendication 1, caractérisé en ce que les modules de freinage (20) présentent un levier pivotant (21), qui agit sur une barre mobile (42) du module de liaison (40).

9. Système de freinage selon la revendication 8, caractérisé en ce que le levier pivotant (21) agit sur des surfaces de contact (47) réalisées sur la barre mobile (42).

10. Système de freinage selon la revendication 1, caractérisé en ce que le module à pédales (30) présente au moins une pédale (31) courbe, logée de manière à pouvoir pivoter et comportant une partie de base (32) et une partie mobile (33), la partie mobile agissant sur un levier à bascule (43) du module de liaison.

11. Système de freinage selon la revendication 10, caractérisé en ce qu'il est prévu deux pédales (31) de ce type, l'une formant la pédale de freins (5) et l'autre la pédale de desserrage des freins (35).

12. Système de freinage selon la revendication 10, caractérisé en ce que le module de liaison (40) présente des barres mobiles (42), lesquelles sont posées dans le fond du conteneur (7).

13. Système de freinage selon la revendication 1, caractérisé en ce que le module de liaison (40) présente deux leviers à bascule (43), disposés aux extrémités, et deux barres mobiles (42) plates, lesquels forment un parallélogramme articulé, actionné uniquement par des forces de pression.

14. Système de freinage selon la revendication 1, caractérisé en ce que tous les organes de liaison entre les modules (20, 30, 40), destinés à transmettre les mouvements des pédales sur les freins (25) des roues, sont actionnés uniquement par des forces de pression (P1, P2).

15. Système de freinage selon la revendication 1, caractérisé en ce que tous les organes de liaison dans les modules (20, 30, 40), destinés à transmettre les mouvements des pédales sur les freins, sont actionnés uniquement par des forces de pression (P1, P2).

16. Système de freinage selon la revendication 1, caractérisé en ce que la pédale de freins (5) est remise dans sa position initiale au moment du desserrage des freins par une force exercée par un ressort dans le module de freinage (20).

17. Système de freinage selon la revendication 1, caractérisé par un levier à bascule (43), dont les deux extrémités s'engagent chacune dans un évidement (41) réalisé sur chacune des deux barres mobiles (42) plates.

18. Système de freinage selon la revendication 1, caractérisé en ce que les modules de freinage (20) sont munis d'un dispositif de levage (22) comportant une partie inclinée (27) et une pièce complémentaire (24, 29), lequel dispositif de levage peut être actionné par l'intermédiaire des surfaces de contact (46) sur les barres mobiles (42), et est destiné à produire un mouvement de levage qui actionne le frein (25) monté sur les roues.

19. Système de freinage selon la revendication 18, caractérisé en ce que le dispositif de levage présente une partie inclinée (27) agissant comme surface active avec la barre mobile (42) et un élément de transfert (29) formant une pièce complémentaire agissant sur le frein, lequel élément de transfert peut se déplacer sur la partie inclinée, perpendiculairement à la barre mobile.

20. Système de freinage selon la revendication 19, caractérisé par un levier à bras unique formant l'élément de transfert (29), qui est fixé par une extrémité contre le fond du conteneur (7) et agit avec l'autre extrémité sur un piston de frein (52), et entre les deux extrémités est en appui sur la partie inclinée (27) en agissant comme pièce complémentaire.

21. Système de freinage selon la revendication 18, caractérisé en ce qu'un élément de ressort (26) est intercalé entre le dispositif de levage (22) et le frein (25) monté sur les roues.

22. Système de freinage selon la revendication 18, caractérisé en ce que le dispositif de levage (22) présente un disque à coulisse (23) pivotant, muni d'un levier pivotant (21) et d'une pièce complémentaire (24) fixe associée formant boîtier.

23. Système de freinage selon la revendication 22, caractérisé en ce que le disque à coulisse (23) présente moins deux parties inclinées (27) équidistantes et des cames ou ergots (28) arrondis, associés aux parties inclinées, réalisés sur la pièce complémentaire fixe (24).

24. Système de freinage selon la revendication 18, caractérisé en ce que le dispositif de levage (22) présente un disque à coulisse (23) pivotant et une pièce de levage (19) formant la pièce complémentaire logée de manière à ne pas tourner.

25. Système de freinage selon la revendication 18, caractérisé en ce que la pente de la partie inclinée (27) est plus accentuée au début qu'à la fin de la partie inclinée.

26. Système de freinage selon la revendication 18, caractérisé en ce qu'au moins l'une des deux parties, partie inclinée (27) et pièce complémentaire (24, 29), est réalisée en matière plastique.

27. Système de freinage selon la revendication 18, caractérisé en ce qu'au moins l'une des deux parties, partie inclinée (27) et pièce complémentaire (24, 29), est moulée par injection, coulée ou forgée.

28. Système de freinage selon la revendication 18, caractérisé en ce que, par l'intermédiaire d'un piston sollicité par un ressort, le dispositif de levage (22) pousse un sabot de freins (51) contre l'unité de roues.

29. Système de freinage selon la revendication 18, caractérisé en ce que le module de freinage est logé au moins partiellement à l'intérieur du fond du conteneur (7) et en ce que le module de freinage forme conjointement avec l'unité de roues une unité de construction.

30. Trolley comprenant un système de freinage selon l'une quelconque des revendications précédentes.
